Europäisches Patentamt

European Patent Office

Office européen des brevets

(11) Veröffentlichungsnummer: **0 279 287**
**A2**

(12) **EUROPÄISCHE PATENTANMELDUNG**

(21) Anmeldenummer: 88101592.9

(22) Anmeldetag: 04.02.88

(51) Int. Cl.4: **C08L 69/00** , C08L 35/06 ,
G11B 7/24

(30) Priorität: 14.02.87 DE 3704688

(43) Veröffentlichungstag der Anmeldung:
24.08.88 Patentblatt 88/34

(84) Benannte Vertragsstaaten:
DE FR GB IT

(71) Anmelder: **BAYER AG**

**D-5090 Leverkusen(DE)**

(72) Erfinder: **Wehnert, Wolfgang, Dr.**
**Bodelschwinghstrasse 14**
**D-4150 Krefeld(DE)**
Erfinder: **Grigo, Ulrich, Dr.**
**Michelsheide 9**
**D-4152 Kempen 3(DE)**
Erfinder: **Schmid, Helmut, Dr.**
**Wedelstrasse 69**
**D-4150 Krefeld(DE)**

(54) **Mischungen aus thermoplastischen Polycarbonaten und thermoplastischen Styrol-Maleinsäureanhydrid-Copolymeren und ihre Verwendung als Substrate für optische Datenspeicher.**

(57) Gegenstand der vorliegenden Erfindung sind Mischungen bestehend aus
(A) 50 bis 80 Gew.-% an thermoplastischen, aromatischen Copolycarbonaten, die p-(Iso-C$_8$-C$_9$-alkyl)-phenyl-Endgruppen aufweisen, und
(B) 50 bis 20 Gew.-% an thermoplastischen Styrol-Maleinsäureanhydrid-Copolymerisaten sowie ihre Verwendung als Substrate für optische Datenspeicher.

EP 0 279 287 A2

## Mischungen aus thermoplastischen Polycarbonaten und thermoplastischen Styrol-Maleinsäureanhydrid-Copolymeren und ihre Verwendung als Substrate für optische Datenspeicher

Gegenstand der vorliegenden Erfindung ist die Verwendung von thermoplastischen Mischungen bestehend aus

(A) 50 bis 80 Gew.-%, vorzugsweise 65 bis 80 Gew.-%, an thermoplastischen, aromatischen Copolycarbonaten, die p-(Iso-C$_8$-C$_9$-alkyl)-phenyl-Endgruppen aufweisen, und

(B) 50 bis 20 Gew.-%, vorzugsweise 35 bis 20 Gew.-%, an thermoplastischen Styrol-Maleinsäureanhydrid-Copolymerisaten die dadurch gekannzeichnet sind, daß der Gehalt an Maleinsäureanhydrid in den Copolymerisaten jeweils zwischen 2 und 30 Gew.-%, vorzugsweise zwischen 3 und 15 Gew.-%, bezogen auf Gewichtssumme aus Styrol und Maleinsäureanhydrid liegt, und daß die Copolycarbonate als Diphenole 25 Mol-% bis 80 Mol-%, vorzugsweise 30 Mol-% bis 70 Mol-% und insbesondere 35 Mol-% bis 60 Mol-%, 1,1-Bis-(4-hydroxyphenyl)-cyclohexan und 75 Mol-% bis 20 Mol-%, vorzugsweise 70 Mol-% bis 30 Mol-% und insbesondere 65 Mol-% bis 40 2,2-Bis-(4-hydroxyphenyl)-propan einkondensiert enthalten.

Die erfindungsgemäßen Mischungen sind aufgrund ihrer niedrigen Doppelbrechung als Substrate für optische Datenspeicher geeignet, da solche Mischungen sich zur Herstellung von Formkörpen mit besonders niedriger Doppelbrechung in tangentialer und radialer Richtung zur Plattenfläche eignen.

Gegenstand der vorliegenden Erfindung ist somit auch die Verwendung der erfindungsgemäßen Mischungen als Substrate für optische Datenspeicher.

Die anteilmäßige Zusammensetzung einer solchen Abmischung, bei der nicht nur Verringerung sondern Kompensation der Doppelbrechung auftritt, kann aufgrund unterschiedlicher Fließvorgänge der Schmelze von der Gestalt eines Formkörpers abhängen.

Die Information optischer Datenträger wird mit dem linear polarisierten Licht eines Lasers gelesen und im Falle beschreibbarer Datenspeicher auch eingeschrieben. Eines der Systeme für beschreib- und löschbare Verfahren sind die magnetooptischen Datenspeicher: Hier muß besonderer Wert auf doppelbrechungsfreies Substratmaterial gelegt werden, da eine geringfügige Drehung (unter 1°) der Licht-Schwingungsebene schon als Signal gelesen wird.

Doppelbrechung setzt sich in Kunststoffen (Thermoplasten) im wesentlichen aus 2 Faktoren zusammen: Einer materialspezifischen Komponente einerseits und einem verarbeitungsbedingten Anteil, der auch als Orientierungsdoppelbrechung bezeichnet wird, andererseits.

Doppelbrechungsarme, thermoplastische Formteile können somit durch zweierlei Maßnahmen hergestellt werden, entweder durch die Wahl geeigneter Verarbeitungsparameter, beispielsweise durch Verarbeitung von niedrigviskosen Typen bei relativ hoher Temperatur wie etwa beim Spritzgießen oder Spritzprägen von Audio-Compact-Discs aus thermoplastischem Polycarbonat, oder durch den Einsatz von Material, das von sich aus nur geringe Neigung zur Doppelbrechung zeigt, wie beispielsweise Polymethylmethacrylate, welche für die Herstellung von Video-Discs verwendet werden.

Beschreibbare Speicherverfahren wie z. B. magnetooptische Systeme erfordern beim Beschreiben eine relativ hohe Energie, um ein akzeptables Signal/Rausch-Verhältnis zu bekommen. Dazu wird eine Optik mit großer numerischer Apertur verwendet. Durch den Öffnungswinkel der Schreib-und Leseoptik bedingt, bekommt eine möglichst geringe optische Anisotropie auch für den Strahlenverlauf in tangentialer und radialer Richtung erhebliche Bedeutung. So zeigen Compact Discs, die in achsialer Richtung bereits sehr niedrige Gangunterschiede der Doppelbrechung (unter 10 nm/mm) aufweisen, tangential und radial noch hohe Meßwerte, typischerweise um 500 1000 nm/mm.

In der DE-OS 2 252 974 (Le A 14 616) und in "Hansen und Bland, Impact Strength and Melt Viscosity of Bisphenol-A-Polycarbonate and Styrene-Maleic-Anhydride Copolymer Blends", Polymer Engineering and Science, 1985, Vol. 25, No. 14, Seiten 896 bis 902, werden Mischungen aus Polycarbonaten mit Styrol-Maleinsäureanhydrid-Copolymerisaten beschrieben. Die Verwendung als Substrate für optische Datenspeicher wird dort jedoch nicht angesprochen.

Die in diesen beiden Literaturstellen beschriebenen Polycarbonate haben außerdem keine p-(Iso-C$_8$-C$_9$-alkyl)-phenyl-Endgruppen. Hierbei wurden jedoch die Zitierungen der "Hansen und Bland" Literaturstelle nicht berücksichtigt.

In der japanischen Offenlegungsschrift Sho-61-19656 vom 28.01.1986 werden Gemische aus Polycarbonaten mit Styrol-Maleinsäureanhydrid-Copolymeren beschrieben. Diese Gemische werden als Rohstoffe für optische Apparate empfohlen. Die in der Sho-61-19656 beschriebenen Polycarbonate haben jedoch nicht die p-(Iso-C$_8$-C$_9$-alkyl)-phenyl-Endgruppen, sondern als nächstvergleichbaren Kettenabbrecher für die Polycarbonate ist p-tert.-Butylphenol offenbart. Derartige Mischungen aus Polycarbonaten mit p-tert.-Butylphenyl-Endgruppen haben jedoch gegenüber Polycarbonaten mit p-(Iso-$C_8$-$C_9$-alkyl)-phenyl-Endgruppen den Nachteil, daß die aus ihnen ge formten Spritzgußkörper (z. B. Compact Discs) starke Schwankungen bezüglich der optischen Homogenität (Doppelbrechnung) aufweisen.

Entsprechendes gilt für die Lehre der EP-OS 0 199 824, veröffentlicht als WO86/02653 am 09. Mai 1986.

Schließlich sind beispielsweise aus der EP-OS01 83 116 (Le A 23 439-EP) flammwidrige thermoplastische Formmassen auf Basis von halogenfreien Polycarbonaten und Styrol-Maleinsäurea nhydrid-Copolymerisaten bekannt. Hierbei sind als bevorzugte Diphenole 2,2-Bis-(4-hydroxyphenyl)-propan und 1,1-Bis-(4-hydroxyphenyl)-cyclohexan genannt. Die gemäß vorliegender Erfindung geforderten Molverhältnisse der Diphenole für die Copolycarbonate sind in der EP-OS nicht beschrieben, ebensowenig die speziellen p-(Iso-$C_8$-$C_9$-alkyl)-phenyl-Endgruppen. Die Verwendung als Substrate für optische Datenspeicher ist auch nicht angesprochen.

In der EP-OS 0 063 769 bzw. dem US-Patent 4 420 584 sind glasfaserhaltige Mischungen von Polycarbonaten mit Styrol-Maleinsäureanhydrid-Copolymeren beschrieben. Die Verwendung derartiger Mischungen als Substrate für optische Datenspeicher ist nicht ausgesprochen.

Die einzusetzenden Polycarbonate können Alkylphenole (Seite 6, EP-OS 0 063 769, Zeile 5) oder beispielsweise Butyl-phenole, speziell p-tert.-Butyl-phenol (Spalte 5, Zeile 8 von US-PS 4 420 584) als Kettenabbrecher eingebaut enthalten.

Aus der DE-OS 3 347 684 (Le A 22 595) ist ein Verfahren bekannt, die Doppelbrechung von Kunststoffolien durch eine spezielle Oberflächenbehandlung stark zu reduzieren oder sogar zu eliminieren. Als Kunststoffe sind Polystyrol, Polyvinylchlorid, Polyacrylsäureester und Polyester, insbesondere Polycarbonat, genannt. Die Folien sollen Formstabilität, Wasserdampfdurchlässigkeit, Kratzfestigkeit und Temperaturunempfindlichkeit aufweisen, sich leicht beiformen lassen und chemisch gegen die Einwirkung vielfältiger Hilfschemikalien beständig sein. (Seite 6 der DE-OS 33 47 684.)

Aus der DE-OS 34 15 104 (Le A 23 047) sind optisch einachsige Kunststoffolien bekannt, die mit einem Polyacrylatlack beschichtet sind, wodurch die Wasserdampfdurchlässigkeit vermindert und die Chemikalienfestigkeit verbessert wird (Seite 8, Absatz 5 der DE-OS). Als Kunststoffe genannt sind u. a. Polystyrol, Styrol-Acrylnitril-Mischpolymerisate, Polycarbonat, Polyacrylsäureester, Polymethacrylsäureester, Celluloseester oder Mischungen und Copolymerisate, welche die genannten Polymeren enthalten (Seite 8, letzter Absatz der DE-OS). Ganz besonders bevorzugt sind Polycarbonat oder Mischungen von Kunststoffen, die mindestens 10 Gew.-% Polycarbonat enthalten (Seite 9, Absatz 1 der DE-OS 34 15 104). Geeignet sind auch Mischungen von Polymeren, die optisch durchsichtige Kunststoffe liefern. Der Vorteil dieser Mischungen ist eine Verbesserung der mechanischen, insbesondere aber der chemischen Eigenschaften, vor allem der Widerstandsfähigkeit des Kunststoffs gegen die Bestandteile der flüssigkristallinen Phase bei erhöhten Temperaturen. Bevorzugt sind Mischungen mit Siliconen oder Polyestern (DE-OS 34 15 104, Seiten 12/13).

Als Polystyrole sind auch Mischpolymerisate des Styrols mit Maleinsäureester geeignet (Seite 12, Absatz 2 der DE-OS 34 15 104).

Mischungen von Polycarbonaten mit Styrol-Maleinsäureanhydrid-Copolymerisaten sind in der DE-OS 34 15 104 nicht erwähnt.

Die in der DE-OS 3 415 104 beschriebenen Polycarbonate haben außerdem keine p-(Iso-$C_8$-$C_9$-alkyl)-phenyl-Endgruppen.

Aus der DE-OS 33 27 929 (Le A 22 015) sind doppelbrechungsfreie Kunststoffe bekannt, die diese Eigenschaft dadurch erreichen, daß mindestens zweiflächige Gebilde aus Kunststoff mit je einer optischen Achse senkrecht zur Flächennormalen unter einem Winkel von 90° parallel hintereinander angeordnet sind, und daß die Summe der Gangunterschiede überall nahezu Null ist. Vorzugsweise werden Folien so miteinander kombiniert, daß eine Kompensation der Doppelbrechung eintritt (Seite 6 der DE-OS, Absätze 2 und 3).

Geeignete Kunststoffe sind z. B. Polyarylsulfon, Polystyrol, Polyvinylchlorid oder Polyurethan. Vorzugsweise verwendet man Polymerisate, die gute optische Qualitäten haben, wie Styrol-Acrylnitril-Mischpolymerisate, Polymethylpenten, Polycarbonat, Polyacrylsäureester, Polymethacrylsäureester, Celluloseester oder Mischungen und Copolymerisate, welche die genannten Polymere enthalten. Ganz besonders bevorzugt werden Polycarbonat oder Mischungen von Kunststoffen, die mindestens 10 Gew.-% Polycarbonat enthalten, eingesetzt.

Styrol-Maleinsäureanhydrid-Copolymere sind in der DE-OS 33 27 929 nicht erwähnt, jedoch sind als Polystyrole Mischpolymerisate des Styrols mit Maleinsäureester zu verstehen (Seiten 14/15 der DE-OS). Die beschriebenen Polycarbonate haben außerdem keine p-(Iso-$C_8$-$C_9$-alkyl)-phenyl-Endgruppen.

Die doppelbrechungsfreien Kunststoffe gemäß DE-OS 33 27 929 müssen neben ausreichenden mechanischen Eigenschaften sich kontinuierlich und flexibel zu allen geforderten Formen verarbeiten lassen und müssen chemisch gegen die Einwirkung vielfältiger Hilfschemikalien beständig sein (DE-OS 33 27 929, Seiten 5/6). Die doppelbrechungsfreien Kunststoffe können noch beschichtet sein (DE-OS, Seite 9).

Geeignet sind die doppelbrechungsfreien Kunststoffe überall dort, wo beispielsweise Laserlichtquellen, Polarisationsfilter, Monolayers, dichroitische Farbstoffe oder doppelte Schichtlagen gebraucht werden (DE-OS 33 27 929, Seiten 15/16).

Bekannt ist auch die allgemeine Möglichkeit, die Doppelbrechung eines Polymeren zu verringern, indem man ein Polymeres mit entgegengesetzter Doppelbrechung hinzu fügt (J. Hennig, Vortrag auf der Tagung "Neue Polymere" in Bad Nauheim, 14./15. 04. 1986: "Polymere als Substrate für optische Plattenspeicher").

Nikkei Sangyo (Industry Daily) berichtet in der Ausgabe vom 07. 02. 1986 in einem Artikel "Sumitomo Chemical Developed New Resin for Erasable Optical Discs" davon, daß die Firma optische Datenspeicher aus einem Material aus Polycarbonat und modifiziertem Polystryrol auf den Markt bringen will, die nur geringe Doppelbrechung zeigen.

Die Molekulargewichte $\overline{M}w$ (Gewichtsmittel) der Polycarbonate gemäß Komponente (A) liegen zwischen 10.000 und 40.000, vorzugsweise zwischen 15.000 und 35.000, ermittelt über die relative Viskosität in $CH_2Cl_2$ bei einer Konzentration von 0,5 g Polycarbonat in 100 ml Lösung oder ermittelt durch andere übliche Methoden wie Lichtstreuung oder Gelchromatographie.

Die Herstellung der Polycarbonate gemäß Komponente (A) mit p-(Iso-$C_8$-$C_9$-alkyl)-phenyl-Endgruppen ist in der DE-OS 2 842 005 (Le A 19 006) bzw. in dem entsprechenden US-Patent 4 269 964 beschrieben.

Die erfindungsgemäß zu verwendenden Styrol-Maleinsäureanhydrid-Copolymeren gemäß Komponente (B) sind bekannte thermoplastische Copolymerisate mit Molekulargewichten $\overline{M}w$ (Gewichtsmittel) zwischen 60.000 und 400.000, vorzugsweise zwischen 80.000 und 350.000. Die Ermittlung des $\overline{M}w$ der Styrol-Maleinsäureanhydrid-Copolymerisate erfolgt durch übliche Methoden wie Lichtstreuung, Gelchromatographie oder relative Lösungsviskosität, mit Eichung nach der universellen Eichkurve nach Benoit (Grubisic, Rempp, Benoit, J. Polym. Sci. B 5 (1967) 753).

Die Herstellung der erfindungsgemäßen Mischungen kann beispielsweise durch Compoundierung bei der Extrusion, die Verarbeitung der Mischungen zu Formkörpern, bzw. zu Datenspeichern erfolgt beispielweise durch Spritzguß.

Die Verwendung der erfindungsgemäßen Mischungen als Substrate für optische Datenspeicher kann wie folgt erläutert werden: "Substrat" für optische Datenspeicher im erfindungsgemäßen Sinne ist das Material der mechanischen Grundlage einer Datenplatte, das sowohl als Träger für eine Informationsschicht bzw. -ebene dient als auch den Abstandshalter zwischen dieser informationstragenden und der äußeren -ebenen-Plattenoberfläche darstellt.

Der informationstragende Lichtstrahl muß sowohl zum Lesen als auch zum Schreiben unverändert das Substrat durchlaufen - auf dem Weg von der ebenen Plattenoberfläche zur gegenüberliegenden Datenseite ebenso wie - im Falle des Lesestrahls - nach Informationsübertragung von dieser wieder zur äußeren Oberfläche zurück, aus der er zum Detektor hin austritt.

Beispiele für optische Datenspeicher sind beispielsweise die Audio-Compact-Disc un die Video-Disc.

Beispiele (* = nicht erfindungsgemäß)

Beispiel 1*

Zu einer Lösung von 4,02 kg (15 Mol) 1,1-Bis-(4-hydroxyphenyl)-cyclohexan in 50 kg 45 %iger wäßriger NaOH wurden 26,5 kg Methylenchlorid zugefügt, sodann bei 23°C unter Rühren 2,38 kg (24 Mol) Phosgen eingeleitet und 179 g (0,87 Mol) 4-(1,1,3,3-Tetramethyl-butyl)-phenol, gelöst in 2 kg Methylenchlorid, zugetropft. Nach Zugabe von 12 ml N-Ethylpiperidin wurde 1 h nachgerührt und durch das übliche Ansäuren, Neutralwaschen und Eindampfen ein farblos transparentes Polycarbonat vom $\eta_{rel}$1,203 (gemessen in Methylenchlorid bei 5 g/l und 25°C) erhalten.

Das Polycarbonat wurde an einer Arburg 170 Minispritzgußmaschine zu Flachstäben 80 x 12,7 x 1,6 mm verspritzt bei einer Massetemperatur von 300°C. Dabei wurden glasklar transparente Stäbe erhalten. Die Doppelbrechung des Polycarbonats wurde beurteilt durch messung des Gangunterschieds in der Mitte des Flachstabes im Durchlicht unter Verwendung eines üblichen Komparators mittels eines Polarisationsmikroskops. Der Gangunterschied betrug 480 nm/mm.

Beispiel 2*

Gemischt wurden wechselnde Anteile des Polycarbonates aus Beispiel 1 und eines handelsüblichen Styrol-Malein säureanhydrid-Copolymeren (SMA) mit 5 Gew.-% Maleinsäureanhydrid (Mw = 300 000, U = Mw/Mn = 6,7, ermittelt durch Gelchromatographie mit UV-Detektor und PS-Eichung) durch Compoundierung an einer ZSK 32 bei 270 - 290°C.

Dabei wurden bei Gehalten von 30, 40, 50 und 60 Gew.-% SMA stark getrübte Mischungen erhalten.

## Beispiel 3*

Wie in Beispiel 2 wurden Polycarbonat und ein SMA compoundiert, das 8 Gew.-% Maleinsäureanhydrid enthielt.

Die erhaltenen Michungen waren bei SMA-Gehalten von 30 Gew.-% und 70 Gew.-% stark getrübt.

## Beispiel 4*

Gemäß Beispiel 1 wurde ein Copolycarbonat hergestellt aus 2,01 kg (7,5 Mol) 1,1-Bis-(4-hydroxyphenyl)-cyclohexan und 1,71 kg (7,5 Mol) Bisphenol A. Das Copolycarbonat hatte ein $\eta_{rel}$ von 1,206 (gemessen wie in Beispiel 1).

## Beispiel 5

Gemischt wurden wechselnde Teile des Copolycarbonats aus Beispiel 4 und des Styrol-Maleinsäureanhydrid-Copolymeren (SMA) des Beispiels 2 durch Compoundierung an einer ZSK 32 bei 270 - 290°C. Die erhaltenen Compounds wurden an einer Arburg 170 Minispritzgußmaschine zu Flachstäben 80 x 12,7 x 1,6 mm verspritzt bei einer Massetemperatur von 270°C. Es wurden transparente, glasklare Flachstäbe erhalten. Die Doppelbrechung der Mischungen wurde beurteilt durch Messung der Gangunterschiede in der Mitte der Flachstäbe durch Verwendung eines üblichen Komparators mittels eines Polarisationsmikroskops.

Bei einem Gehalt von 70 Gew.-% Copolycarbonat wurde ein Gangunterschied von 20 nm/mm gemessen und die Schlagzähigkeit $a_n$ = 62 kJ/m² (nach DIN 53 453) am Normkleinstab bei 23°C bestimmt.

## Beispiel 6*

Beispiel 5 wurde wiederholt, wobei jedoch der Anteil an Copolycarbonat 30 Gew.-% und der Antei an Styrol-Maleinsäureanhydrid-Copolymerisat (SMA) 70 Gew.-% betrug. Der Gangunterschied betrug -400 nm/mm.

## Beispiel 7

Wie in Beispiel 5 wurde Copolycarbonat aus Beispiel 4 mit dem Styrol-Maleinsäureanhydrid-Copolymeren des Beispiels 3 gemischt.

Es wurden wie in Beispiel 5 glasklar transparente Flachstäbe erhalten. Bei einem Gehalt von 70 Gew.-% Copolycarbonat wurde ein Gangunterschied von 40 nm/mm gemessen und die Schlagzähigkeit $a_n$ = 56 kJ/m² (nach DIN 53 453) am Normkleinstab bei 23°C bestimmt.

## Beispiel 8*

Beispiel 7 wurde wiederholt, wobei jedoch der Anteil an Copolycarbonat 30 Gew.-% und der Anteil an Styrol-Maleinsäureanhydrid-Copolymerisat (SMA) 70 Gew.-% betrug. Der Gangunterschied betrug -390 nm/mm.

## Ansprüche

1. Mischungen bestehend aus

(A) 50 bis 80 Gew.-%, an thermoplastischen, aromatischen Copolycarbonaten, die p-(Iso-C₈-C₉-alkyl)-phenyl-Endgruppen aufweisen, und

(B) 50 bis 20 Gew.-%, an thermoplastischen Styrol-Maleinsäureanhydrid-Copolymerisaten dadurch gekennzeichnet, daß der Gehalt an Maleinsäureanhydrid in den Copolymerisaten jeweils zwischen 2 und 30 Gew.-%, bezogen auf Gewichtssumme aus Styrol und Maleinsäureanhydrid, liegt, und daß die Copolycarboante als Diphenole 25 Mol-% bis 80 Mol-% 1,1-Bis-84-hydroxyphenyl)-cyclohexan und 75 Mol-% bis 20 Mol-% 2,2-Bis-(4-hydroxypyhenyl)-propan einkondensiert enthalten.

2. Mischungen gemäß Anspruch 1 bestehend aus 65 bis 80 Gew.-% der Komponente A) und 35 bis 20 Gew.-% der Komponente B).

3. Mischungen gemäß Anspruch 1, dadurch gekennzeichnet, daß die Copolycarbonate als Diphenole 30 Mol-% bis 70 Mol-% 1,1-Bis-(4-hydroxyphenyl)-cyclohexan 70 Mol-% bis 30 Mol-% 2,2-Bis-(4-hydroxyphenyl)-propan einkondensiert enthalten.

4. Mischungen gemäß Anspruch 1, dadurch gekennzeichnet, daß die Copolycarbonate als Diphenole 35 Mol-% bis 60 Mol-% 1,1-Bis-(4-hydroxyphenyl)-cyclohexan und 65 Mol-% bis 40 Mol-% 2,2-Bis-(4-hydroxyphenyl)-propan einkondensiert enthalten.

5. Mischungen gemäß Anspruch 1, dadurch gekennzeichnet, daß der Gehalt an Maleinsäureanhydrid in den Copolymerisaten jeweils zwischen 3 und 15 Gew.-% liegt.

6. Verwendung der Mischungen gemäß Ansprüche 1 bis 5 als Substrate für optische Datenspeicher.